(19) **Europäisches Patentamt**

**European Patent Office**

**Office européen des brevets**

(11) **EP 0 715 262 B1**

(12) **EUROPEAN PATENT SPECIFICATION**

(45) Date of publication and mention
of the grant of the patent:
**30.08.2000 Bulletin 2000/35**

(51) Int. Cl.[7]: **G06F 13/40**

(21) Application number: **94830561.0**

(22) Date of filing: **02.12.1994**

(54) **A differential SCSI/single-ended SCSI interface adapter/converter**

Adapter/Wandler für differentiale und unsymetrische SCSI-Schnittstelle

Adapteur/convertiseur pour interface SCSI différentiel et SCSI asymétrique

(84) Designated Contracting States:
**DE FR GB IT**

(43) Date of publication of application:
**05.06.1996 Bulletin 1996/23**

(73) Proprietor: **BULL S.A.**
**78434 Louveciennes Cedex (FR)**

(72) Inventors:
• **Tagliabue, Pierluigi**
**I-20159 Milano (IT)**
• **Macchi, Alberto**
**I-20025 Legnano (Milano) (IT)**

(74) Representative:
**Pezzoli, Ennio et al**
**Jacobacci & Perani S.p.A.**
**Via Senato, 8**
**20121 Milano (IT)**

(56) References cited:
**EP-A- 0 348 148**     **EP-A- 0 540 001**

• **IBM TECHNICAL DISCLOSURE BULLETIN.,
vol.31, no.4, September 1988, NEW YORK US
pages 293 - 296, XP26892 'Dual-bus Interface for
Small Computer Interface Controllers.'**

EP 0 715 262 B1

**Description**

The present invention relates to an interface adapter/convertor for connecting a peripheral unit or controller, having an interface of the single-ended SCSI type, to a communication channel of the differential SCSI type.

As is known, to interconnect a number of peripheral units, such as disk units, CD ROM read units and the like with central processing units, communication channels or bus of a standardized type have been developed. Of these, the SCSI (an acronym for Small Computer System Interface) channel as set forth in US Standard X3.131-199X is perhaps the most widely used one.

The SCSI bus was originally developed as a bus wherein the leads used for signal transmission are biased by a resistor connected to a suitable supply voltage, and the various units which command the application of signals to the leads connect the various leads electrically to ground (single-ended SCSI).

The longest connection span between units allowed by that bus is 6 meters.

To enable connections of greater length between units, as well as to provide better noise immunity, a bus termed differential SCSI has been developed which uses the same communication protocol but has different electric characteristics, and in which each signal is transmitted over two balanced lines which are suitably biased electrically.

Electric equipment provided with interfaces of the single-ended SCSI type obviously cannot be connected to a differential SCSI bus, and vice versa.

Control units are available commercially which permit a system channel to be interfaced with a SCSI bus regardless of whether this is a differential or a single-ended type. An example of such units is the I/O SCSI processor NCR 53C720.

Thus, a system equipped with this processor can be connected to input/output peripherals using either a differential or a single-ended SCSI bus, depending on the type of the peripherals of choice.

But it would not permit of the connection of peripherals with different interfaces to the same one bus; these must be either of the differential or the single-ended type throughout.

Accordingly, that type of control cannot fill such a stringent demand as is that of being able to use, in most up-to-date data processing systems incorporating differential SCSI connect channels, peripherals with single-ended SCSI interfaces along with peripherals having differential interfaces, e.g. in those cases where a user owns already such peripherals and wishes to replace a processing system with a more advanced one of greater capacity without having to replace all of the mass memories available, but merely add new high-performance ones.

Substantial engineering problems must be solved before this demand can be filled.

Document EP-A-0348148 discloses a SCSI bus converter supporting only SCSI targets on the differential SCSI bus.

A purely passive type of electric signal level matching interface is impractical in that it would involve the use of electronic circuits, such as transceivers, which form feedback loops and impose an irreversible electric state on the signal leads.

This because most of the leads in a SCSI bus serve a function of bi-directional signal transfer and the signal source changes with the various steps of the communication protocol and with the different units connected in the bus.

An interface device would be needed, therefore, which receives, from the different units connected in the bus or just some of them, control signals for the various transceivers according to the protocol steps.

However, existing peripherals do not supply these signals. The problem is made more serious by that the units connected in a SCSI bus do not play a univocal role but, depending on circumstances, each of them can activate a communication protocol or be called upon to transfer information as a target interlocutor.

Thus, an interface is needed which is intelligent to a degree, as well as simple and inexpensive, and capable of managing the stream of signals in both directions, without introducing substantial propagation delay and without impairing the performance of the communication channel, from information available on the SCSI bus.

This problem is solved and the user's demand filled by the interface adapter/converter as set out in the first claim. Particularly, in this converter a simple state machine, being interfaced on one side with a differential SCSI bus and on the other side with a single-ended SCSI bus, is capable of recognizing the start of an arbitration step and if one or more units are connected to the single-ended SCSI bus and which of them partake in the arbitration process, and is accordingly capable of controlling the transfer direction between the two interfaces over predetermined interface leads such that the arbitration process and consequent intercommunication process can be carried out consistently with the protocol set for the SCSI bus.

Advantageously, in order to minimize the duration of the arbitration process, the interface adapter/converter of this invention is arranged for connection to a single target unit having a single-ended SCSI interface.

The adapter/converter may, however, be provided as an interfacing unit with a single-ended SCSI bus to which several peripherals, preferably of the target type throughout, can be connected.

Even this limitation can be removed at the expense of increased complexity of the adapter/converter that, in this case, would function as an interconnection link between two SCSI buses, a differential one and a single-ended one,

2

with no greater a total number of connected units than 8.

In all of these cases, the adapter/converter functions as a universal device and requires no tailoring to the system configuration and to the identifiers of peripheral units connected in the SCSI bus. The features and advantages of the present invention will be more clearly apparent from the following description and the accompanying drawings, in which:

Figure 1 is a timing chart describing the communication protocol used in the SCSI bus;
Figure 2 is a general diagram of a preferred embodiment of the converter according to the present invention;
Figure 3 is a detailed diagram of a logic control circuit of the converter in Figure 2 for controlling the flowing direction of a select signal;
Figure 4 shows a modification of the circuit in Figure 3;
Figure 5 is a structural block diagram of a finite state machine of the converter in Figure 2;
Figure 6 is a logic flow diagram illustrating the states of the machine in Figure 5 and the transitions from one state to another;
Figure 7 is a logic flow diagram illustrating the states of a state machine for a converter which is open to the interconnection of target and initiating units arbitrarily connected to either the differential bus or the single-ended bus.

For a better understanding of the invention, it would seem appropriate to first summarize the basic features of the SCSI bus.

The SCSI bus is a communication channel arranged to interconnect up to 8 devices provided with an SCSI interface.

Communication over the SCSI bus takes place between two devices at a time, of which one functions as the "initiator" of the communication and the other as the addressee or "target" thereof.

The devices connected in a SCSI bus usually play a fixed role, respectively of initiator and target, but there are devices that can play both roles.

A typical example of an initiator would be an I/O processor, and a typical example of a target would be a disk unit, CD ROM reader, and the like.

Initiators and targets can be connected in a SCSI bus in any combinations, on condition that there be at least one initiator and one target.

Certain communication functions are assigned to the inititator, others to the target.

The initiator can arbitrate for access to the SCSI bus and select a given target. However, a target can also arbitrate for access to the SCSI bus to re-select an initiator and resume interrupted operations.

In general, the target is responsible for requesting from the initiator the transfer of commands, data, states on a data channel.

The transfer of information on the data channel is usually asynchronous (but may be synchronous) and carried out in conformity with a predetermined request/acknowlegde protocol known as the handshaking of two signals REQ/ACK.

The signals used by the SCSI bus and the corresponding leads are the following:

| | |
|---|---|
| BSY (busy) | a lead and signal that when asserted or true indicates that the channel is being used; |
| SEL (selection) | a lead and signal asserted by an initiator to select a target peripheral, and by a target to re-select an initiator; |
| C/D(commands/data) | a lead and signal driven by a target to indicate whether the information present on the channel is data (false C/D signal) or command signals (true C/D signal); |
| I/O (input/output) | a lead and signal driven by a target to indicate the direction of a data stream through the data channel relative to an initiator; when asserted or true, it indicates that the data are being input to the initiator; this signal is also used to tell a selection step from a re-selection step (true or asserted I/O); |
| MSG (message) | a lead and signal driven by a target during a message step; |
| REQ (request) | a lead and signal driven by a target to indicate a request for transfer; |
| ACK (acknowledge) | a lead/signal driven by an initiator to acknowledge receipt of a transfer request; |
| ATN (attention) | a lead and signal driven by an initiator to warn of an attention condition; |
| DB (0-7, P) | leads and signals of data transfer (8) and a parity bit; these may be driven by any units connected in the bus; during an arbitration step, they are used to identify by their assertion the various units competing for access to the bus; each unit is assigned one of the 8 leads/signals; during a selection or re-selection step, the asserted signals identify the initiator and the target which partake in the transfer of information. |

Also provided is a reset lead and signal (RST) which may be driven by any units but is usually driven by an initiator.

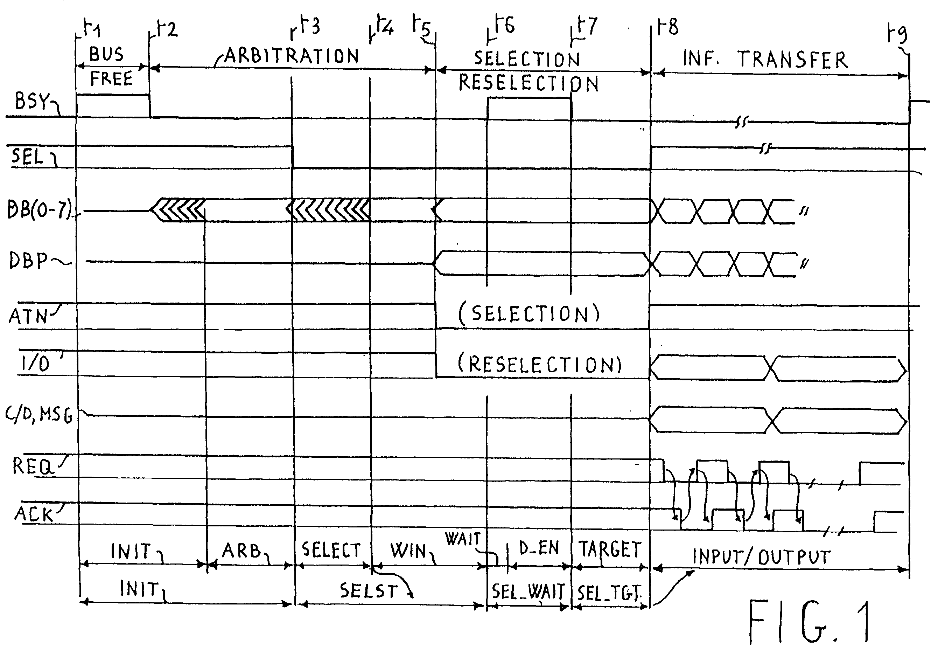

From the logic standpoint, the operation of the SCSI bus comprises 5 separate steps, as illustrated by the timing chart of Figure 1, the following assumptions being used in the Figure as well as later in this description:

a signal is asserted or true or at a logic level of 1 whenever its electric level is zero or low or de-asserted or false, or at a logic level of 0 whenever its electric level is positive or high.

Figure 1 shows the electric levels.

The operation steps of the SCSI bus are as follows:

1) Free bus (BUS FREE, interval t1-t2): during this step, both signals BSY and SEL are false and no transfer is taking place on the bus.

2) Arbitration step (ARBITRATION, interval t2-t4): any unit connected in the bus can activate this step by asserting BSY and the unit identification signal on the lead DBi related to it, after checking that the bus had been free for a predetermined minimum time period.

Several units can partake in the arbitration, in the asynchronous mode. Thus, after waiting for a predetermined time period, the various units taking part in the arbitration will check the state of the data channel DB (0-7). That unit which has the identifying signal of highest weight (the weight of the signals DBi increases from 0 to 7) can then assert the signal SEL (time t3) whilst the other units are to release the signal BSY (which stays driven in an asserted state by the winning unit in the arbitration) and their identifying signal DBi within a predetermined time interval (time t4). The winning unit may be an initiator directed to select a target or a target directed to re-select an initiator.

3) Selection step (SELECTION, interval t5-t8); the winning initiator, after asserting the signal SEL, allows a predetermined minimum time period (t3,t4) to expire in order to enable the other units to drop the data channel DB and allow the latter to attain a stable electric state (SETTLE DELAY, interval t4 to t5), and then asserts, on the data channel, in addition to its own identifier the identifier for the target unit (and the correct parity bit DBP) and the signal ATN on the same name lead (time t5).

Then, after a predetermined time period, to ensure a propagation of signals previously asserted along the channel, it drops the signal BSY, which will enter the false or de-asserted level.

The selected target recognizes itself as the target because its identifier DBi is asserted together with SEL, whereas BSY is de-asserted, and acknowledges the recognition by driving the signal BSY to a true or asserted level (time t7).

At this time the initiator, recognizing the asserted BSY, can terminate the selection step, dropping the signal SEL and removing the data from the channel DB (time t8).

4) Information transfer step (INF.TRANSFER, interval t8-t9); once the selection step is completed, the selected target commands the transfer operations by driving the signals C/D, I/O, MSG to a suitable level and asserting the signal REQ once or more times which is responded with ACK by the initiator.

During this step, the channel DB is driven by either of the units which take part in the transfer according to the logic level of the signal I/O.

On completion of the transfer operation, the target drops the signal BSY, and the bus is restored to the bus free state (time t9).

5) Re-selection step (RESELECTION, interval t5-t8); target units which desire to be re-connected to an inititator may also take part in the arbitration.

The target unit that comes out a winner from the arbitration activates a re-selection step by asserting SEL, the signal I/O, and the identifier DBi of the addressed initiator, and ultimately de-asserts BSY in wait for the addressed initiator to acknowledge the re-selection, on which occurrence the target drops SEL and drives the signal BSY to the true level until the following transfer step is completed.

Thus, the re-selection step is identical with the selection step, except that the signal I/O is asserted instead of the signal ATN.

It can be appreciated, therefore, that certain signals, such as the signals C/D, I/O, MSG and REQ, are always driven by a target, whereas other signals, such as ACK and ATN, are always driven by an initiator, but the remaining DBi, BSY and SEL are driven differently according to the steps and the role played by the intercommunicating units.

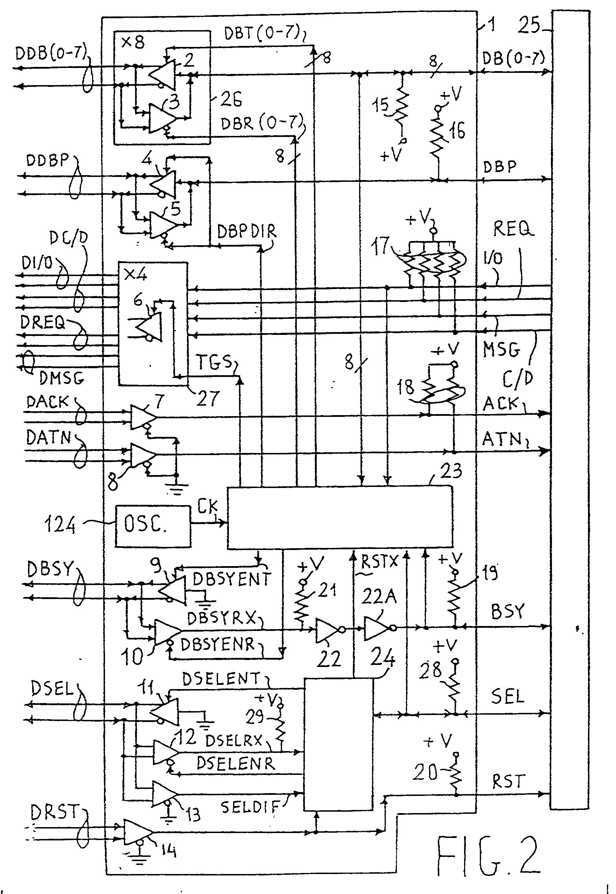

Proper handling of these signals is provided by the converter shown in the diagram of Figure 2 which constitutes a preferred embodiment, specially arranged for connecting a single target unit, such as a disk unit, to a differential SCSI bus.

The converter is generally denoted by the reference numeral 1 and comprises a plurality of differential drivers 2, 4, 6, 9, 11, a plurality of differential receivers 3, 5, 7, 8, 10, 12, 13, 14, a plurality of line polarization resistors 15, 16, 17, 18, 19, 20, 21, 28, two inverters 22, 22a in series, a control logic 24 for transferring the signal SEL, and a state machine 23 which is clocked by a clock signal CK to be generated by an oscillator 124. The converter has interfacing terminals for connection to a peripheral unit 25, with a single-ended SCSI interface, and for transferring the previously described signals (DB(0-7), DBP, I/O, REQ, etc.), and terminal pairs for connection to a differential SCSI bus and transferring the above-described signals over a differential bus.

These signals have been denoted the same as the corresponding single-ended interface signals but with a D prefix (DDB(0-7), DDBP, DC/D. DI/O. etc.).

For simplicity and clarity, the signal transmission leads are denoted the same as the signals they transfer.

The driver 2 and receiver 3 in the block 26 represent an octet of driver-receiver pairs, each with a driver differential output connected to the differential input of the receiver and the driver input connected to the receiver output.

The differential output/input of each pair is connected to a pair of the data leads DDB(0-7), respectively.

The input of each driver (and the corresponding receiver output) is respectively connected to one of the data leads DB(0-7) of the single-ended interface, and biased to a positive electric level by a bias resistor 15 connected to a voltage supply +V (e.g., +5V).

The resistor 15 is actually an aggregate of eight discrete resistors, one for each lead.

The eight drivers 2 are individually enabled to transmit by a respective one of eight command signals DBT(0-7) when the related command signal is at a positive electric level.

The signals DBT(0-7) are generated by the state machine 23.

When the command signal DBT(0-7) is at a zero electric level, the driver is open with its outputs isolated, that is in a "tri-state" condition.

Likewise, the eight receivers 3, with an inverting command input, are individually enabled to receive by a respective one of eight signals DBR(0-7) when the command signal is at a zero electric level.

Otherwise, their outputs are isolated (tri-state). The signals DBR(0-7) are also generated by the state machine 23.

The pair of the driver 4 and the receiver 5 form a transceiver having an input/output connected to the single-ended interface lead DBP (biased to a positive electric level by the resistor 16) and a differential input/output connected to the lead pair DDBP (parity bit) of the differential interface.

The driver 4 and receiver 5 are alternately enabled to receive and transmit in a mutually exclusive manner by the signal DBPDIR issuing from the state machine 23 and being applied to their respective command inputs.

The driver 6 in the block 27 represents an aggregate of four drivers, having their inputs respectively connected to the leads I/O, REQ, C/D, MSG of the single-ended interface and differential outputs respectively connected to the homolog differential interface lead.

The drivers are normally in a tri-state condition and enabled to transmit by a positive electric level signal TGS.

TGS is generated by the state machine 23.

In view of the assumption made that the unit 25 was a target peripheral, it will be enough if it is able to transfer the signals, I/O, REQ, C/D, MSG, toward an initiator connected to the differential interface.

Accordingly, no receivers are required for transferring these signals from the differential interface toward the peripheral.

For the same reason, the permanently enabled receivers 7, 8 have their differential inputs respectively connected to the lead pairs DACK, DATN and their outputs respectively connected to the single-ended interface leads ACK, ATN for transferring, to the peripheral 25, the attention (ATN) and acknowledgment (ACK) signals generated by an initiator to the target unit 25.

The leads ACK and ATN are biased to a positive electric level by the resistor pair 18.

The driver 9 has its differential output connected to the differential interface lead pair DBSY and its input connected to ground, and is enabled to transmit by a positive electric level signal DBSYENT generated by the state machine 23.

The receiver 10 has its differential input connected to the lead pair DBSY and its output connected to the input of the inverter 22 and biased to a positive electric level by the resistor 21.

The output of the inverter 22 is connected to the input of the inverter 22A, whose output is connected to the single-ended interface lead BSY.

The lead BSY is biased to a positive electric level by the resistor 19 and also connected to an input of the state machine 23. The two inverters 22, 22a in series function as delay and buffer elements.

The receiver 10 is enabled to receive by a signal DBSYENR generated by the state machine 23 when this signal is at a zero electric level.

The driver 11 has its differential output connected to the differential interface lead pair DSEL and its input connected to ground.

Being normally in the tri-state condition, it is enabled to transmit (and, therefore, assert the signal DSEL) by a signal DSELENT at a positive electric level.

The signal DSELENT is generated by the logic unit 24.

The differential input receiver 13 connected to the lead pair DSEL is permanently enabled to receive (its command inverting input is grounded), and transfers the signal SELDIF, a logic duplicate of the signal DSEL, to the output 24.

The differential input receiver 12 connected to the lead pair DSEL is receive-enabled by a signal DSELENR at a zero electric level, which is generated by the unit 24 to which it supplies, when enabled, the signal DSELRX, a logic copy of the signal DSEL. The output of the receiver 12 is biased to a positive electric level by a resistor 29. The unit 24 has an output connected to the single-ended interface lead SEL to receive and transfer the signal SEL. The lead SEL is also connected to an input of the state machine 23 and to a biasing resistor 28.

Finally, the receiver 14, being permanently enabled to receive, has its differential input connected to the pair of leads DRST and its output connected to the single-ended interface lead RST (biased by the resistor 20) to transmit a reset signal from an initiator to the peripheral 25, and to the unit 24, which will supply it as signal RSTX to the state machine.

Before discussing in detail the state machine 23, which controls the whole communication process between the differential and single-ended interfaces, it may be of help if the logic unit 24 controlling the signal SEL which operates independently of the state machine is first reviewed in detail.

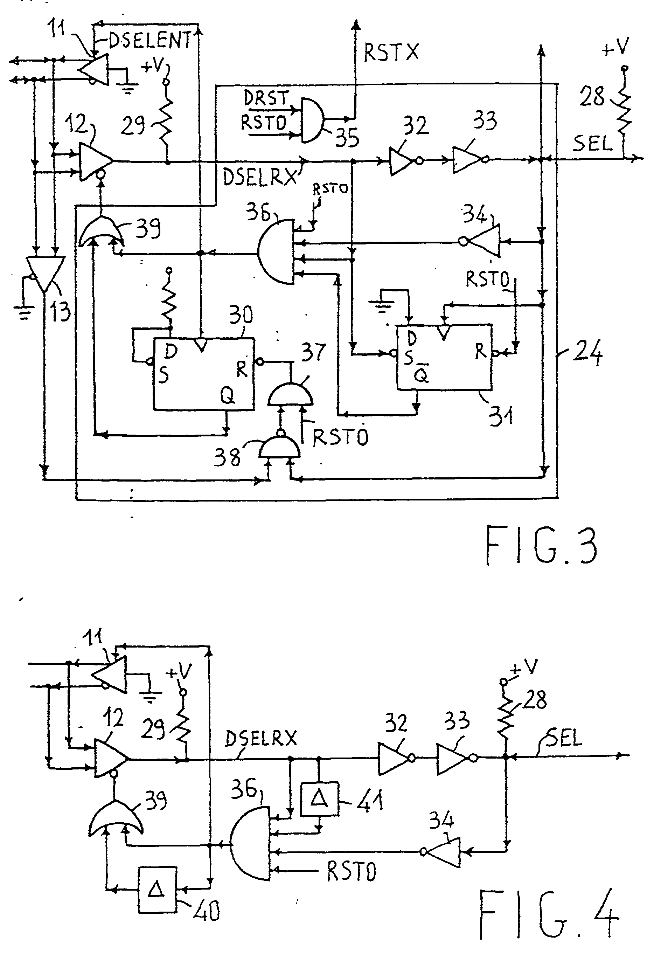

With reference to Figure 3, the unit 24 comprises two flip-flops 30, 31 of the D type; three inverters, 32, 33, 34; three AND gates 35, 36, 37; a NAND gate 38; and an OR gate 39.

The input lead/signal DSELRX is connected to one input of the AND gate 36 and to the input of the inverter 32 connected in series with the inverter 33 whose output is connected to the single-ended interface lead SEL.

The lead SEL is connected to the clock input of the flip-flop 31, to one input of the NAND gate having two inputs 38, and through the inverter 34, to a second input of the AND gate 36, which receives on a third input an initializing reset signal RSTO (conventionally generated as the apparatus is turned on) which is normally at a positive electric level and at zero level when turned on.

A fourth input of the AND gate 36 is connected to the output Q̲ of the flip-flop 31.

The underlining of a reference symbol which identifies a terminal or a signal means here, and will later be used to mean, reversal or negation of the electric level of the terminal or signal.

The flip-flop 31 has its data input D connected to ground, its set input S connected to leads DSELRX, and is input the signal RSTO on its reset input R.

The output of the AND gate 36 is connected to the transmit command lead DSELENT, the clock input of the flip-flop 30, and one input of the two-input OR gate 39.

The flip-flop 30 has its data input D and set input S biased to a positive electric level and its output Q connected to the second input of the OR gate 39, whose output is connected to the command input of the receiver 12.

The output of the receiver 13 is connected to the second input of the NAND gate 38, whose output is connected to a first input of the AND gate 37 receiving the signal RSTO on its second input.

The output of the AND gate 37 is connected to the reset input of the flip-flop 30.

The logic 24 functions to permit of back-and-forth transfer between the differential and the single-ended interface, thereby avoiding stalled situations.

It is to prevent, moreover, the transferring of spurious signals in the transition from asserted to de-asserted level. The signal SEL can be asserted over the differential bus by an initiator for selecting the peripheral 25 (Figure 2) as the target unit, or by the peripheral 25 for re-selecting an initiator.

The two operations are separate and not time overlapped. The logic network 24 is initially reset by the signal RSTO, and in this condition, it can be readily checked that the signals DSELENR and DSELENT are at a zero electric level, whereby the receiver 12 is enabled and the driver 11 disabled.

As the signal DSEL is asserted, the signal DSELRX is pulled to a zero level and input to the AND gate 36 to hold the receiver 12 in the enabled state and the driver 11 latched.

The zero-level signal DSELRX, being transferred by the two inverters 32, 33, causes SEL to be asserted on the single-ended interface and supplied to the set input of the flip-flop 31 to switch it to the set state.

As the signal DSEL is de-asserted, and DSELRX brought back to a positive electric level while the output of the inverter 34 is still at a positive electric level, the output of the AND gate 36 is held at a zero electric level because the flip-flop 31 has been set.

It is only on the signal SEL changing from a zero electric level to a positive level that the flip-flop 31 is reset, while the inverter 34 output, presently at a zero electric level, holds the AND gate 36 in the previous state.

If the signal SEL is now asserted by the peripheral 25, the output of the inverter 34 goes to a positive electric level and, as a result, the output of the AND gate 36 goes to a positive level, thereby enabling the driver 11 and latching the receiver 12.

At the same time, the flip-flop 30 is changed to a set state, and its output $\underline{Q}$ at a high electric level restates the disabled state of the receiver 12.

As SEL is de-asserted (i.e. brought to a positive electric level), the already reset flip-flop 31 stays reset, and the output of the inverter 34 is brought to a zero electric level.

Consequently, the output of the AND gate 36 drops to a zero electric level and disables the driver 11.

It has no effect, however, on the receiver 12, which is held latched by the state of the flip-flop 30.

It is only on the signal DSEL going to an asserted level (with SEL already de-asserted), as recognized by the receiver 13, that the set flip-flop 30 is reset and the receiver 12 enabled.

The enabling of the receiver 12, simultaneously with the driver 11 disabling, could generate at the output of the receiver 12 a spurious transition to zero electric level of the signal DSELRX which would then be transferred to the differential interface.

A viable modification of the circuit in Figure 3 which provides the same effect without using bi-stable elements and an auxiliary receiver to monitor the differential bus, such as 13, is shown in Figure 4.

In Figure 4, the AND gate 36 has its output connected to the second input of the OR gate 39 through a delay element 40 (as well as directly connected to the first input of the OR gate 39 and the command input of the driver 11).

Two inputs of the gate 36 are connected to the output of the receiver 12, the one directly and the other through a second delay element 41.

An input signal RSTO to the AND gate 36 provides an initial state of the network whereby the receiver 12 is enabled and the driver 11 is disabled.

Upon SEL being asserted, the output of the AND gate 36 goes to an electric high and enables the driver 11, disabling the receiver 12.

Upon SEL being de-asserted, the output of the AND gate 36 drops to a zero level and latches the driver 11.

The enabling of the receiver 12 is delayed by the element 40, so that spurious transitions of the receiver output with the possible triggering of fluctuations in the signal SEL can be prevented.

Likewise, upon DSEL being asserted, DSELRX goes to a zero electric level and holds the output of the AND gate 36 at a zero level before the signal transfer through the inverters 32, 33 and 34 can remove the driven condition of the gate 36 to a low output.

Upon DSEL being de-asserted, the signal DSELRX goes to an electric high, but a change of the AND gate 36 to a high-output condition is prevented by the delay element 41 driving it to a low level for a sufficient length of time to allow the output signal from the inverter 34 to go from a high level to zero level. Thus, the receiver 12 will remain enabled and the driver 11 latched.

It can be seen that the operation of the logic of Figure 3 or Figure 4 is unrelated to the role of the units connected to the two interfaces, which may arbitrarily be an initiator or a target.

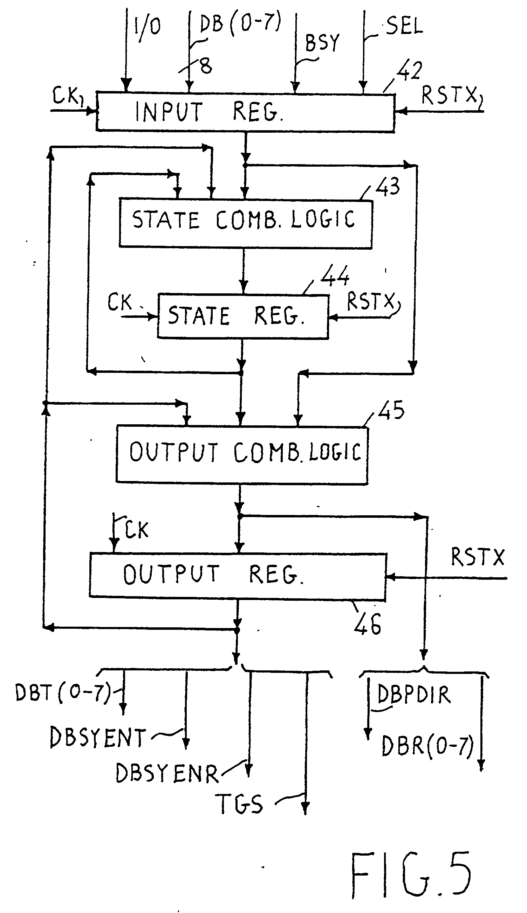

Figure 5 shows the construction of the state machine 23 of Figure 2 in schematic form.

This comprises an input register (INPUT REG) 42 clocked by the signal CK to staticize the input signals I/O, DB(0-7), BSY, SEL; a first combinatorial logic network 43 being supplied the output of the register 42 which sets the machine state in conformity with the input signal; a state register STATE REG 44 having inputs connected to the output of the combinatorial network 43; a second combinatorial logic network 45 connected to the output of the register 44; and a third output register OUTPUT REG 46 having inputs connected to the output of the network 45.

The outputs of the state register 44 are connected to inputs of the combinatorial logic 43, which is also input the output signals from the register 46.

The combinatorial logic 45 is input the output signals from the register 42 and the register 46, additionally to the output signals from the register 44.

The combinatorial logic 43 sets the machine state in accordance with the input signals, and the logic 45 decides, according to the state and other input signals, which level the command signals are to be, some of which signals, in particular DBT(0-7), DBSYENT, DBSYENR and TGS, are staticized into the register 46, whereas the remainder (DBPDIR and DBR(0-7)) are supplied, without staticizing, directly to their respective drivers and receivers.

The three registers 42, 44, 46 are clocked by the clock signal CK, and the whole machine can be reset initially by the signal RSTX.

Staticizing the signals at three levels ensures proper operation of the state machine even in the presence of several signals which vary asynchronously, and avoids instability phenomena.

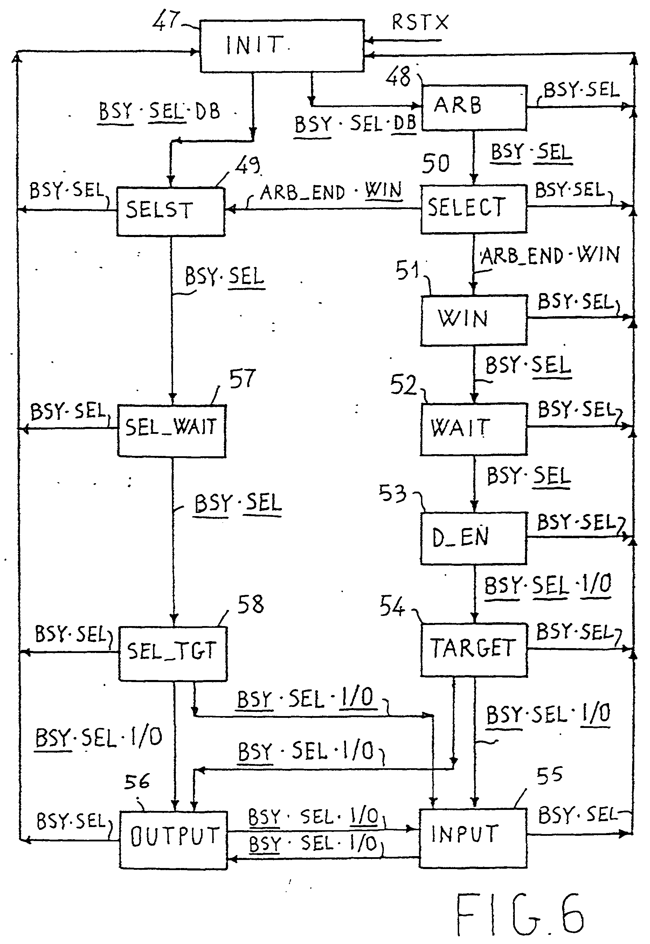

The operation of the state machine is made clear, rather than by an itemized description of the combinatorial logics, by the following Table I of machine states, and by the state chart of Figure 6 showing the different machine states and the interstate transition flows.

Also, in Figure 1, the machine states are time related to the operational steps of the bus SCSI.

For simplicity and clarity, it is assumed that a single target has been connected to the single-ended interface of the converter.

The description will later be expanded to also encompass the connection of several targets to the single-ended interface and a case in which the devices connected to the single-ended interface are also initiators, not targets only.

Table 1 lists all possible cases, and for each state, specifies by a 1 or a 0 the (high or low) electric levels of the output signals from the state machine.

TABLE 1

| STATE | TGS | DBSYENT | DBSYENR | DBT(0-7) | DBR(0-7) | DBPDIR |
|---|---|---|---|---|---|---|
| INIT | 0 | 0 | 0 | 0 | 1 | 0 |
| ARB | 0 | 1 | 0 | NOTE A | NOTE B | 0 |
| SELECT | 0 | 1 | 0 | NOTE A | NOTE B | 0 |
| WIN | 1 | 1 | 1 | 1 | 1 | 1 |
| WAIT | 1 | 0 | 0 | 1 | 1 | 1 |
| EN_DR | 1 | 0 | 0 | 1 | 1 | 1 |
| TARGET | 1 | 1 | 0 | 1 | 1 | 1 |
| OUTPUT | 1 | 1 | 1 | 0 | 0 | 0 |
| INPUT | 1 | 1 | 1 | 1 | 1 | 1 |
| SELST | 0 | 0 | 0 | 0 | 0 | 0 |
| SEL-WAIT | 0 | 0 | 1 | 0 | 0 | 0 |
| SEL_TARGET | 1 | 1 | 0 | 0 | 0 | 0 |

NOTE A)
DBi is the identification bit for the target unit connected to the single-ended interface, DBi being asserted, that is at zero electric level; DBTi is at a level of 1.
NOTE B)
DBRi = 1; all the other DBRJ's (J not equal i) are at a level of 0.

The different machine states will now be discussed with reference to Table 1 and the state chart of Figure 6.

INIT STATE (Block 47, Figure 6)

In the initial state, corresponding to the bus free condition and a portion of the arbitration step (Figure 1: BUS FREE ARBITRATION), the signals BSY and SEL are inactive (high).

The machine is waiting for a start cycle, which commences with the assertion of BSY on the bus. Since BSY can be either asserted on the differential bus or the single-ended interface, the signal DBSYENR must be active at a level 0 in this state, and DBSYENT inactive (at a level 0) so that the machine can receive a signal BSY which is the connected OR of DBSY and BSY.

In addition, in this step, the machine should check the unit connected to the single-ended interface for assertion of a unit identifier DBi to partake in the arbitration.

Accordingly, all the signals DBR(0-7) should be inactive at a level 1, in this state.

The signal DBT(0-7) is also inactive at a level 0. If, with BSY active and SEL de-asserted, a signal DBi is asserted, this means that the unit connected to the single-ended interface is partaking in the arbitration, and the machine goes over to arbitration state ARB (block 48).

The state changing condition is given by the following equation (again with reference to the electric level of the signals:

$$\overline{BSY} * \overline{SEL} * \overline{DB} = 1$$

where, DB=DB1*DB2*DB3...DB7 .

On the other hand, if no signal DBi is asserted during the period when SEL is asserted, with the assertion of SEL (in this case, DSEL would be asserted of necessity), the machine goes over to state SELST (block 49).

The state changing condition is given by the following equation:

$$\underline{BSY} * \underline{SEL} * DB = 1$$

Thus, by checking the signals BSY, SEL, DB(0-7), the machine can recognize that an arbitration process has been started, no matter where from, and whether the unit 25 (Figure 2) does partake in the arbitration process.

It will be noticed that in this step, it does not matter whether the unit 25 is a target or an initiator.

ARB STATE (Block 48)

To admit of arbitration by those different units connected in the bus which can compete for access to the bus, it is necessary that the unit 25 should transmit its identifier DBi on the differential bus, and receive at the same time the identifier of the units connected in the differential bus.

Therefore, in this state, the signal DBTi must be at a level of 1 and the signals DBRj (j not equal i) must be at a level of 0.

The end of the arbitration process is determined by the winner unit asserting the signal SEL.

The state machine is unable to tell which unit asserted the signal SEL, and can only recognize that SEL has been asserted.

After the assertion of SEL, the state machine enters state SELECT (block 50).

The change condition is given by the equation: $\underline{BSY}*\underline{SEL}=1$

SELECT STATE

In this state, the machine is to recognize whether the unit 25 is the winner in the arbitration.

Therefore, the bus situation (time t4 in Figure 1) must be identified in which all of the competing units in the arbitration, less the winner unit, have de-asserted their identifier DBj.

This condition is identified by an internal signal ARB-END in accordance with the following equation:

$$\text{ARB-END} = \underline{DB0} * DB1 * DB2...DB7+ DB0 * \underline{DB1} * DB2...DB7+ ...................... DB0 * DB1 * DB2...\underline{DB7}$$

This signal cannot establish whether the arbitration has beeen won by the unit 25 or by other units connected in the differential bus.

It is, therefore, apparent that if the unit 25 has come out the winner, the active signal DBTi will be congruent to the asserted signal DBi. This condition is identified by an internal signal WIN generated as per the following equation:

$$\text{WIN} = DBTO * DB0 * DBT1 * \underline{DB1} +...DBT7 * \underline{DB7}$$

Evidently, WIN=1 is only significant at the end of the arbitration process, when ARB_END=1.

If WIN=0 when ARB_END=1, this would mean that the unit 25 (or any other unit connected to the single-ended interface) is a loser in the arbitration.

Accordingly, on the occurrence of the condition ARB_END*WIN=1 , the machine goes to state WIN (block 51, Figure 6), and on the occurrence of the condition ARB_END*$\underline{WIN}$=1 goes to state SELST (block 49).

WIN STATE

In this state, the machine raises all the signals DBT(0-7) and all the signals DBR(0-7), thereby enabling the drivers 2 to transmit and opening the receivers 3 (Figure 2).

In addition, it raises the level of the signal DBPDIR, enabling the driver 4 to transmit, and opening the receiver 5 (Figure 2).

The signal TGS is also brought to 1, enabling the driver 6 and the transmission of the signals I/O, REQ, MSG, C/D from the unit 25 to the differential bus.

This with the assumption that the unit 25 is a target that has been allowed to access the bus for a re-select operation.

Consistently with this assumption, the receivers 7, 8 (Figure 2) are enabled at all times.

The signal DBSYENT is held high.

In this state, the machine will be waiting for BSY to be de-asserted by the unit 25, and on the occurrence of this, goes to state WAIT.

The change condition is defined by the following equation:

$$BSY * \underline{SEL} = 1$$

WAIT STATE (Block 52, Figure 6)

In this state, the machine lowers the signal DBSYENT and signal DBSYENR, thereby enabling the receiver 10 to receive the signal DBSY from the differential bus.

With the receiver 10 enabled, the machine checks if the output signal DBSYRX from the receiver 10 has actually been de-asserted (for the same reasons as set forth in relation to signal SEL) and transferred through the inverters 21, 22 (Figure 2) over the lead BSY.

A possible spurious re-assertion over the lead BSY would not disturb the unit 25 which is to wait, conformant with the specifications SCSI, for at least 400 ns since the de-assertion of BSY, before it can take a successive assertion into consideration.

The condition for changing to the successive state D_EN is given by equation:

$$BSY * \underline{SEL} = 1$$

Alternatively and similar to the foregoing and with reference to the signal SEL, an auxiliary differential receiver can be connected to the lead pair DBSY and permanently enabled to transfer, to the state machine, the signal DBSY actually present on the differential bus and put off the receiver 10 (Figure 2) enabling until the next state D_EN, which would be attained on the following condition being met:

$$BSY * \underline{SEL} * DBSY = 1$$

D EN STATE (Block 53, Figure 6)

In this state, the machine will be waiting for BSY to be asserted by the selected unit.

As BSY, being received through the receiver 10 and the inverters 21, 22, is asserted, with SEL and I/O being asserted by the unit 25, the machine recognizes that a unit has been correctly re-selected, and goes to state TARGET.

The condition for changing to the next state is given by equation:

$$\underline{BSY} * \underline{SEL} * \underline{I/O} = 1$$

TARGET STATE (Block 54, Figure 6)

In this state, the machine raises the signal DBSYENT, thereby enabling the driver 9 of the signal BSY on the differential bus, and waits for the unit 25 to de-assert the signal SEL and terminate the re-selection step.

As SEL is de-asserted, with BSY being asserted (either by the selected unit or the unit 25), the machine goes to either state OUTPUT or INPUT, according to whether the signal I/O is asserted or de-asserted.

The conditions for changing to the next state are given the two following equations:

$$\underline{BSY} * SEL * \underline{I/O} = 1 ---> INPUT$$

$$\underline{BSY} * SEL * I/O = 1 ---> OUTPUT$$

INPUT STATE (Block 55, Figure 6)

In this state, the machine disables the receiver of BSY 10 and enables all the drivers because the transferred data are directed to the initiator, that is the re-selected unit.

The machine goes to state OUTPUT when the signal I/O is de-asserted (i.e. brought to an electric level of 1), provided that BSY is logically asserted and SEL de-asserted.

If BSY is de-asserted, the machine goes back to state INIT.

The conditions for changing to the other states are defined by the following equations:

$$\underline{BSY} * SEL * I/O = 1 ---> OUTPUT$$

$$BSY * SEL = 1 ---> INIT$$

OUTPUT STATE (Block 56, Figure 6)

In this state, the machine disables the receiver of BSY 10 and enables the receivers 3 in the block 26 and receivers 5 because the transferred data are directed to the unit 25 as the target.

The machine goes to state INPUT if the signal I/O is asserted or state INIT if BSY is de-asserted.

The condition for changing to the other states is defined by equations:

$$\underline{BSY} * SEL * \underline{I/O} = 1 ---> INPUT$$

$$BSY * SEL = 1 ---> INIT$$

The different machine states have been considered so far which occur when the unit 25 partakes in the arbitration as a target, wins the arbitration, and re-selects an initiator.

It has also been mentioned that if the unit 25 does not partake in the arbitration or comes out a loser, the state machine goes to state SELST.

Since an arbitration has taken place, it may happen that the winning unit desires to select the unit 25 as a target.

The state machine is, therefore, to allow the transfer of information from the differential bus to the unit 25, and the signals DBR(0-7), DBPDIR and DBSYENR are at zero level.

As the signal BSY is de-asserted, obviously as commanded from the differential bus, the machine goes to state SEL_WAIT.

The condition for the change is defined by equation:

$$BST * \underline{SEL} = 1$$

SEL WAIT STATE (Block 57, Figure 6)

In this state, the machine is to check if the selected unit is unit 25.

If the unit 25 is found to be the selected one, then it asserts the signal BSY before the initiator de-asserts SEL.

To recognize this condition, the machine raises DBSYENR and sets itself for recognition of the signal BSY on the single-ended interface only.

The condition for changing to the next state SEL_TGT is defined by equation:

$$\underline{BSY} * \underline{SEL} = 1$$

If this conditin is not met, the machine goes to state INIT at the end of the selection step upon SEL being de-asserted, again provided that BSY has been asserted on the single-ended side.

The condition for the change is defined by equation:

$$BSY * SEL = 1$$

SEL TGT STATE (Block 58, Figure 6)

In this state, the driver 9 of BSY is enabled to allow the target to take over in the bus control (DBSYENT=1).

Thereafter, as SEL is de-asserted by the initiator and the selection step is terminated, and the transfer step begins, the state of the signal I/O (as commanded from the target) must be checked to determine whether the next state is to be a state of INPUT or OUTPUT.

The equations which define the conditions for changing to the two states are the same as have been given for exiting the state TARGET, hereinabove.

Also provided in the flow chart of Figure 6, for each state other than INIT, is the return to the state INIT upon recognition of the de-asserted signals BSY and SEL.

The object of this is to avoid stalled situations in the event of an abnormal interruption occurring in the arbitration and selection processes.

The above description has covered an interface match converter specifically oriented for connecting a single target peripheral, or a differential bus.

It will be noted that the converter is an anonymous type and does not require to be tailored to the identifier of the peripheral to which it is connected.

Without any particular constructional complications, by simple modifications to the state machine, it can be made to also function as an interface converter/adapter for connecting several target peripherals, with a single-ended SCSI interface, to a differential SCSI bus.

The changes would basically affect the transition of the state machine from the state INIT to the state SELECT, and are dictated by that, if several targets are connected to the single-ended interface of the converter and are competing in the same arbitration step, then the respective identifiers are asserted asynchronously and not simultaneously.

A state machine as that described above, which goes from the state INIT over to the state ARB upon recognition of a first identifier being asserted on the single-ended interface and enables all the receivers of the data channel except the corresponding receiver to the asserted identification bit of the first, would later prevent recognition of whether other identifiers have been asserted on the single-ended side.

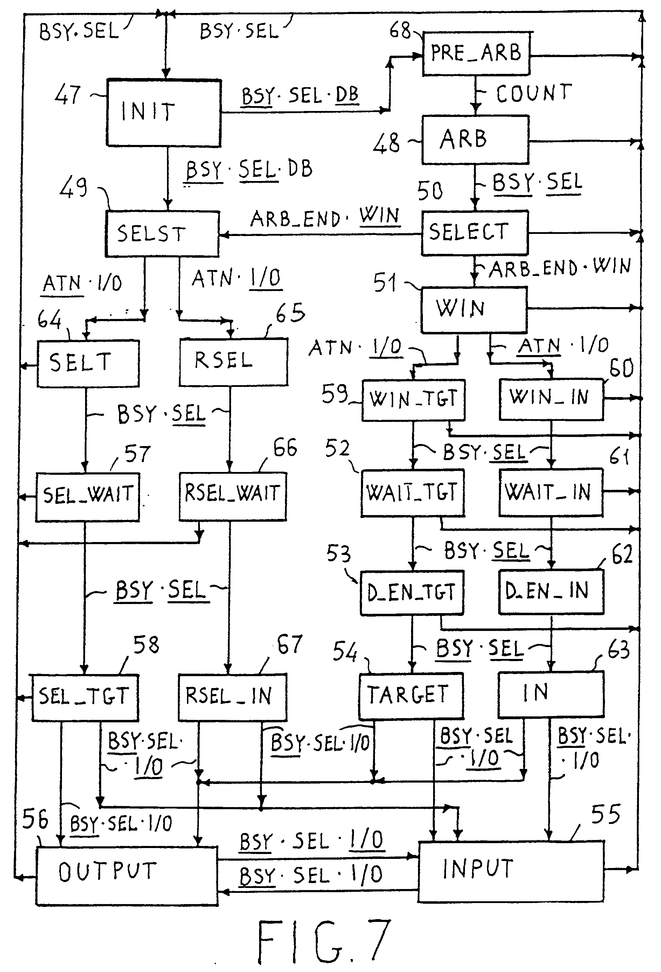

To obviate this limitation, it is enough that a pre-arbitration state PRE_ARB be provided between the state INIT and the state ARB as shown in Figure 7, whence a state ARB is entered after a predetermined time interval set by a counter, clocked by the oscillator 24, and only enabled in the state PRE_ARB.

On the condition BSY*SEL=1 being met, the machine goes over to the state PRE_ARB.

In this state, the receivers 3 in the block 26 are still held in the tri-state condition, and when the signals DBi are recognized as being asserted on the single--ended interface, the corresponding drivers 2 in the block 26 (Figure 2) are enabled.

Upon the counter totalling a given count and raising a signal COUNT=1, with the duration of the count interval being at all events shorter than the minimum arbitration delay (set by the SCSI specifications as the minimum time period for which a device is to wait between the assertion of BSY before checking the state of the data channel DB(0-7)), the state machine can go over to state ARB.

In this state, the machine will only enable those receivers 3 in the block 26 whose corresponding drivers are not enabled.

The output register (Figure 5) of the state machine provides all the information needed to control this operation.

No further changes to the state machine are required, and the state machine goes from state ARB over to state SELECT and following in the same way as described above.

A further generalization that allows the converter to operate with initiators and targets connected in any way to the differential and single-ended interfaces is possible.

With reference to the timing chart of Figure 1, it can be seen that the selection step is characterized as such by the assertion of the signal ATN, and the select step is characterized as a re-selection step by the signal I/O being asserted.

Thus, at a time t5, an information data ATN or I/O becomes available which allows the step to be recognized.

The time t5 is not fixed with any strictness relative to t3 or t6, but would definitely precede t6 by no less than a predetermined minimum amount.

It should also be noted that a re-selected initiator can assert the signal ATN during the re-selection step to transmit a message of "BUS DEVICE RESET" or "DISCONNECTED" to the target.

In this case, however, the signal ATN would forcibly be generated after the initiator has recognized itself as a re-selected unit, i.e. after the time t6.

Accordingly, when the state machine is in the state WIN, that means that a unit connected to the single-ended interface has won in the arbitration, and according to whether ATN or I/O is asserted during the state WIN, the unit will either be an initiator or a target.

When the state machine is in the state SELST, that means that a unit connected in the differential bus has come out the winner in the arbitration, and according to whether ATN or I/O is asserted during the state SELST, the unit will either be an initiator or a target.

In order to allow the state machine to receive the signals ATN and I/O, regardless of their origin, circuits can be used such as those illustrated in Figures 3 and 4, instead of the receiver 8 and driver 6 of Figure 2, and the signal ATN can be input to the state machine.

To transfer the reset signal RST bi-directionally, a similar procedure to that used to manage the signal BSY and developed by the state machine 23 can be used, although it is preferable that the reset function be reserved for a single initiator connected either to the differential bus or the single-ended interface.

Apparently, the block 27 and receiver 7 should be replaced with four transceivers under control by the state machine to allow of the flow of signals C/D, MSG, REQ and ACK to take place in one direction or the other as the case may be.

Alternatively, it would also be possible to control the flow of the signals DBP, C/D, MSG, REQ, ACK using similar circuits to those used to control the flow direction of the signals SEL, ATN and I/O.

This makes the flow of these signals totally unaffected by the role of the units connected in the differential bus of the single-ended unit, as well as by the steps of the intercommunication process.

Thus, no managing by the state machine is required for the flow of these signals.

The recognition by the state machine of the role played by the units is only needed to correctly manage the INPUT and OUTPUT states.

Figure 7 is a flow chart of the states of a state machine which is managing the communications between a differential SCSI bus and a single-ended SCSI bus, with no limitations of the roles and the number of the units connected in each bus, provided that the total number of the units is 8 at most.

Since many machine states are functionally equivalent to those described in Figure 6, the same reference numbers will be used for these states.

From the initial state INIT one goes over to state PREARB 68 upon recognition of the BSY assertion, and on expiry of a predetermined time interval, all the identifiers asserted on the single-ended bus are recognized, thereby enabling the receivers of the unasserted identifiers to receive from the differential bus and going over to state ARB 48.

From state ARB one goes to state SELECT and WIN or SELST upon the same conditions as discussed with reference to Figure 6 being met. From state WIN on, there grow two separate flows of states.

If in state WIN the condition ATN*I/O=1 is met, one goes over to state WIN_TG (block 59) to indicate that the winner unit is a target performing a reselection.

If in state WIN the condition ATN*I/O is met, one goes over to state WIN_IN (block 60) to indicate that the winner unit is an initiator.

From states WIN_TG and WIN_IN, one goes to states WAIT_TG 52 and WAIT_IN 61, respectively, upon the condition BSY*SEL=1 being met.

From states WAIT_TGT and WAIT_IN, one goes to states D_EN_TGT 53 and D_EN_IN 62, respectively, upon the condition BSY*SEL=1 being met.

Finally, from states 53 to 62, one goes over to states TARGET 54 and IN 63, respectively, on the condition BSY*SEL=1 being met.

Throughout these states, from WIN_TGT and WIN_IN on, it becomes possible to control, if requested, the flow direction of the signals ACK, REQ, DBP, CD, MSG according to the role of the winner unit.

From state TARGET 54 one goes to either state INPUT or OUTPUT, respectively, as in the instance of Figure 6.

From state IN 63, one goes to either state INPUT or OUTPUT, respectively, upon the conditions BSY*SEL*I/O=1 or BSY*SEL*I/O=1 being respectively met.

From state INIT 47, one goes to state SELST 49 exactly as in the instance of Figure 6.

If the condition ATN*I/O=1 is met in state SELST, one goes over to state 64 to indicate that the winner unit on the differential bus is an initiator which is performing the selection of a target.

If in state SELST, the condition ATN*I/O=1 is met, one goes to state RSEL 65 to indicate that the winner unit on the differential bus is a target which is performing a re-selection.

From states SELT and RSEL, one respectively goes to states SEL_WAIT 57 and RSEL_WAIT 66 upon the condition BSY*SEL=1 being met.

From states SEL_WAIT and RSEL_WAIT, one respectively goes to states SEL_TGT and RSEL_IN upon the condition BSY*SEL=1 being met, that is upon re-assertion of BSY on the single-ended bus.

From state SEL_TGT, one goes either to state INPUT or OUTPUT as in the instance of Figure 6, and from state RSEL_IN one goes to either state INPUT or OUTPUT upon the conditions BSY*SEL*I/O=1 or BSY*SEL*I/O=1 being respectively met.

From all the states other than INIT, one goes back to state INIT upon the condition BSY*SEL being met as in the instance of Figure 6.

**Claims**

1. An interface adapter/converter between a differential SCSI (Small Computer System Interface) bus and a single-ended SCSI bus, comprising a plurality of differential receivers (3,5,8,10,12,14) adapted to transfer signals from the differential bus to the single-ended bus, a plurality of differential drivers (2,4,6,9,11) adapted to transfer the signal from the single-ended bus to the differential bus, characterized in that it comprises:

   a logic control means (24) of one (12) of said receivers and one (11) of said drivers for enabling said driver (11) and disabling said receiver (12) on assertion of a select signal SEL on said single-ended bus and disabling said driver (11) on de-assertion of said select signal on said single-ended bus, in advance with respect to said receiver (12) being enabled,
   a logic state machine (23) connected to said single-ended bus and to control inputs of at least one sub-set (2,4,6,9,3,5,10) of said drivers and receivers for selectively controlling them, said state machine (23) having a first state (INIT) for recognizing the assertion of a signal BSY, on either said differential bus or said single-ended bus and the assertion of at least a first unit identifier on said single-ended bus, as caused by a first unit (25) connected to said single-ended bus,

a second state (ARB) for controlling the transfer of said first identifier from said single-ended bus toward said differential bus, and the transfer of other identifiers than said first identifier from said differential bus toward said single-ended bus,

a third state (SELECT) for recognising an arbitration as having been won by said first unit (25),

a first sequence of states (51-54;51-54,59-63) for recognising the selection of a second unit connected to said differential bus performed by said first unit (25), and

a second sequence of states (49,57,58;49,57,58,64-67) for recognising the selection of a unit (25) connected to said single-ended bus performed by a unit connected in said differential bus,

said first and second sequences of states ending in one of two states (INPUT, OUTPUT) common to both sequences in conformity with an input/output signal I/O on said single-ended bus, if said first unit (25) is exclusively of a target type, or in conformity with an attention signal ATN and input/output signal I/O if said first unit (25) can be of either the target type or an initiator type, said two states being for control and data transfer from said single-ended bus to said differential bus (INPUT) and vice versa (OUTPUT).

2. The converter of Claim 1, wherein said first unit (25) connected to said single-ended bus is exclusively of the target type and said plurality of receivers is exclusive of receivers for transferring, from said differential bus to said single-ended bus, signals (DACK,DATN) which are exclusively driven from units of the initiator type, and said plurality of drivers is exclusive of drivers for transferring, from said single-ended bus to said differential bus, signals (I/O,REQ,MSC,C/D) which are exclusively driven from units of the target type.

3. The converter of Claim 1, wherein said state machine comprises an input register (42), an output register (46), and a state register (44) which are periodically activated by a clock signal,

4. The converter of Claim 1, wherein said second logic machine state is to control the exclusive transfer of said first asserted identifier on said differential bus, immediately upon its assertion, and the transfer, from said differential bus toward said single-ended bus, of all the other identifiers than said first identifier, immediately upon assertion of said first asserted identifier, so that only one unit can be connected in said single-ended bus.

5. The converter of Claim 1, wherein said logic control means (24) comprises:

a first flip-flop (31) set in a first state upon assertion of said signal SEL at the output of one of said differential receivers, and set in a second state upon de-assertion of said signal SEL transferred on said single-ended bus, and

a second flip-flop (30) set in a first state upon assertion of said signal SEL on said single-ended bus and set in a second state upon de-assertion of said signal SEL transferred from said single-ended bus to said differential bus, said assertion being recognized by an auxiliary differential receiver (13) connected in said differential bus.

6. The converter of Claim 1, wherein said state machine has

a fourth state (WIN) for recognizing, based on the mutually exclusive assertion of attention ATN and input/output signals I/O, the role of said winner unit (25) in the arbitration connected to said single-ended bus, respectively as either an initiator or target role, and

a fifth state (SELST) for recognizing, based on the mutually exclusive assertion of attention ATN and input/output I/O signals, the role of said unit (25) connected to said single-ended bus and selected by a unit connected in said differential bus as either an initiator or target role.

**Patentansprüche**

1. Ein Schnittstellenadapter/Umsetzer zwischen einem Differential-SCSI-Bus (SCSI = Small Computer System Interface) und einem Eintakt-SCSI-Bus mit einer Mehrzahl von Differential-Empfangseinrichtungen (3, 5, 8, 10, 12, 14), die angepaßt sind, um Signale von dem Differential-Bus zu dem Eintakt-Bus zu übertragen, und mit einer Mehrzahl von Differential-Treibern (2, 4, 6, 9, 11), die angepaßt sind, um das Signal von dem Eintakt-Bus zu dem Differential-Bus zu übertragen, gekennzeichnet durch folgende Merkmale:

einer Logiksteuerungseinrichtung (24) aus einer (12) der Empfangseinrichtungen und einem (11) der Treiber zum Freigeben des Treibers (11) und zum Sperren der Empfangseinrichtung (12) bei einer Aktivierung eines Auswahlsignals SEL auf dem Eintakt-Bus und zum Sperren des Treibers (11) bei einer Deaktivierung des Auswahlsignals auf dem Eintakt-Bus zeitlich vor einer Freigabe des Empfängers (12),

einer Logikzustandsmaschine (23), die mit dem Eintakt-Bus verbunden ist und die vorgesehen ist, um Eingangssignale zumindest eines Teilsatzes (2, 4, 6, 9, 3, 5, 10) der Treiber und Empfangseinrichtungen zum selektiven Steuern derselben zu steuern, wobei die Zustandsmaschine (23) folgende Zustände aufweist:

einen ersten Zustand (INIT) zum Erkennen der Aktivierung eines Signals BSY entweder auf dem Differential-Bus oder dem Eintakt-Bus und der Aktivierung zumindest eines Identifizierers einer ersten Einheit auf dem Eintakt-Bus, wie durch eine erste Einheit (25), die mit dem Eintakt-Bus verbunden ist, hervorgerufen,

einen zweiten Zustand (ARB) zum Steuern der Übertragung des ersten Identifizierers von dem Eintakt-Bus in Richtung des Differential-Busses und der Übertragung anderer Identifizierer als des ersten Identifizierers von dem Differential-Bus in Richtung des Eintakt-Busses,

einen dritten Zustand (SELECT) zum Erkennen, wenn eine Entscheidung von der ersten Einheit (25) gewonnen worden ist,

eine erste Sequenz von Zuständen (51-54; 51-54, 59-63) zum Erkennen der Auswahl einer mit dem Differential-Bus verbundenen zweiten Einheit, die von der ersten Einheit (25) durchgeführt wird, und

eine zweite Sequenz von Zuständen (49, 57, 58; 49, 57, 58, 64-67) zum Erkennen der Auswahl einer mit dem Eintakt-Bus verbundenen Einheit (25), die von einer mit dem Differential-Bus verschalteten Einheit durchgeführt wird,

wobei die erste und zweite Sequenz von Zuständen in einem von zwei Zuständen (INPUT, OUTPUT), die beiden Sequenzen gemeinsam sind, in Übereinstimmung mit einem Eingabe/Ausgabe-Signal (I/O) auf dem Eintakt-Bus enden, falls die erste Einheit (25) ausschließlich von einem Zieltyp ist, oder in Übereinstimmung mit einem Abrufsignal ATN und einem Eingabe/Ausgabe-Signal I/O enden, falls die erste Einheit (25) entweder von dem Zieltyp oder einer. Initiatortyp sein kann, wobei die zwei Zustände zur Steuerung und Datenübertragung von dem Eintakt-Bus zu dem Differential-Bus (INPUT) und umgekehrt (OUTPUT) vorgesehen sind.

2. Der Umsetzer gemäß Anspruch 1, bei dem die erste Einheit (25), die mit dem Eintakt-Bus verbunden ist, ausschließlich von dem Zieltyp ist, und die Mehrzahl von Empfangseinrichtungen ausschließlich aus Empfangseinrichtungen zum Übertragen von Signalen (DACK, DATN), die ausschließlich von Einheiten des Initiatortyps getrieben werden, von dem Differential-Bus zu dem Eintakt-Bus bestehen, und wobei die Mehrzahl von Treibern ausschließlich aus Treibern zum Übertragen von Signalen (I/O, REQ, MSG, C/D), die ausschließlich von Einheiten des Zieltyps getrieben werden, von dem Eintakt-Bus zu dem Differential-Bus bestehen.

3. Der Umsetzer gemäß Anspruch 1, bei dem die Zustandsmaschine ein Eingangsregister (42), ein Ausgangsregister (46) und ein Zustandsregister (44) aufweist, die durch ein Taktsignal periodisch aktiviert werden.

4. Der Umsetzer gemäß Anspruch 1, bei dem der zweite Logikmaschinenzustand vorgesehen ist, um die ausschließliche Übertragung des ersten aktivierten Identifizierers auf dem Differential-Bus unmittelbar auf dessen Aktivierung hin und die Übertragung aller anderen Identifizierer als des ersten Identifizierers unmittelbar auf eine Aktivierung des ersten aktivierten Identifizierers hin von dem Differential-Bus in Richtung des Eintakt-Busses zu steuern, so daß lediglich eine Einheit mit dem Eintakt-Bus verschaltet sein kann.

5. Der Umsetzer gemäß Anspruch 1, bei dem die Logiksteuerungseinrichtung (24) folgende Merkmale aufweist:

ein erstes Flip-Flop (31), das auf eine Aktivierung des Signals SEL an dem Ausgang eines der Differential-Empfangseinrichtungen hin in einem ersten Zustand eingestellt wird, und auf eine Deaktivierung des Signals SEL hin, das auf dem Eintakt-Bus übertragen wird, in einem zweiten Zustand eingestellt wird, und
ein zweites Flip-Flop (30), das auf eine Aktivierung des Signals SEL auf dem Eintakt-Bus hin in einem ersten Zustand eingestellt wird, und auf eine Deaktivierung des Signals SEL hin, das von dem Eintakt-Bus zu dem Differential-Bus übertragen wird, in einem zweiten Zustand eingestellt wird, wobei die Aktivierung von einer Hilfs-Differential-Empfangseinrichtung (13), die mit dem Differential-Bus verschaltet ist, erkannt wird.

6. Der Umsetzer gemäß Anspruch 1, bei dem die Zustandsmaschine folgende Zustände aufweist:

einen vierten Zustand (WIN) zum Erkennen basierend auf der gegenseitig ausschließlichen Aktivierung des Abrufsignals ATN und Eingabe/Ausgabe-Signals I/O der Funktion der Gewinnereinheit (25) bei der Entscheidung, die mit dem Eintakt-Bus verbunden ist, jeweils entweder als Initiator- oder Ziel-Funktion, und

einen fünften Zustand (SELST) zum Erkennen basierend auf der gegenseitig ausschließlichen Aktivierung des Abrufsignals ATN und Eingabe/Ausgabe-Signals I/O der Funktion der Einheit (25), die mit dem Eintakt-Bus verbunden ist und durch eine Einheit, die mit dem Differential-Bus verbunden ist, ausgewählt ist, entweder als Initiator- oder Ziel-Funktion.

## Revendications

1. Convertisseur/adaptateur d'interface entre un bus SCSI (Small Computer System Interface) différentiel et un bus SCSI asymétrique, comprenant une pluralité de récepteurs différentiels (3, 5, 8, 10, 12, 14) adaptés pour transférer des signaux du bus différentiel vers le bus asymétrique, une pluralité d'émetteurs différentiels (2, 4, 6, 9, 11) adaptés pour transférer le signal du bus asymétrique vers le bus différentiel, caractérisé en ce qu'il comprend :

   un moyen de commande logique (24) de l'un (12) des récepteurs et de l'un (11) des émetteurs pour valider l'émetteur (11) et invalider le récepteur (12) au moment de l'activation d'un signal de sélection SEL sur le bus asymétrique, et invalider l'émetteur (11) au moment de la désactivation du signal de sélection sur le bus asymétrique, en avance par rapport à la validation du récepteur (12),
   un automate logique (23) connecté au bus asymétrique et à des entrées de commande d'au moins un sous-ensemble (2, 4, 6, 9, 3, 5, 10) des émetteurs et des récepteurs, pour les commander sélectivement, cet automate (23) ayant un premier état (INIT) pour reconnaître l'activation d'un signal BSY, sur le bus différentiel ou le bus asymétrique, et l'activation d'au moins un premier identificateur d'unité sur le bus asymétrique, occasionné par une première unité (25) connectée au bus asymétrique,
   un second état (ARB) pour commander le transfert du premier identificateur du bus asymétrique vers le bus différentiel, et le transfert d'identificateurs autres que le premier identificateur du bus différentiel vers le bus asymétrique,
   un troisième état (SELECT) pour reconnaître qu'un arbitrage a été gagné par la première unité (25),
   une première séquence d'états (51-54; 51-54, 59-63) pour reconnaître la sélection d'une seconde unité connectée au bus différentiel, effectuée par la première unité (25), et
   une seconde séquence d'états (49, 57, 58; 49, 57, 58, 64-67) pour reconnaître la sélection d'une unité (25) connectée au bus asymétrique, effectuée par une unité connectée au bus différentiel,
   les première et seconde séquences d'états se terminant dans l'un de deux états (INPUT, OUTPUT) communs aux deux séquences, conformément à un signal d'entrée/sortie I/O sur le bus asymétrique, si la première unité (25) est exclusivement d'un type cible, ou en conformité avec un signal d'attention ATN et un signal d'entrée/sortie I/O si la première unité (25) peut être soit du type cible, soit d'un type initiateur, ces deux états étant destinés à la commande et au transfert de données du bus asymétrique vers le bus différentiel (INPUT) et inversement (OUTPUT).

2. Convertisseur selon la revendication 1, dans lequel la première unité (25) connectée au bus asymétrique est exclusivement du type cible et la pluralité de récepteurs consiste exclusivement en récepteurs pour transférer, du bus différentiel vers le bus asymétrique, des signaux (DACK, DATN) qui sont exclusivement activés par des unités du type initiateur, et la pluralité d'émetteurs consiste exclusivement en émetteurs pour transférer, du bus asymétrique vers le bus différentiel, des signaux (I/O, REQ, MSG, C/D) qui sont exclusivement activés par des unités du type cible.

3. Convertisseur selon la revendication 1, dans lequel l'automate comprend un registre d'entrée (42), un registre de sortie (46) et un registre d'état (44) qui sont activés périodiquement par un signal d'horloge.

4. Convertisseur selon la revendication 1, dans lequel le second automate logique est destiné à commander le transfert exclusif du premier identificateur activé sur le bus différentiel, dès qu'il est activé, et le transfert, du bus différentiel vers le bus asymétrique, de tous les identificateurs autres que le premier identificateur, dès l'activation du premier identificateur activé, de façon qu'une seule unité puisse être connectée au bus asymétrique.

5. Convertisseur selon la revendication 1, dans lequel le moyen de commande logique (24) comprend :

   une première bascule (31) placée dans un premier état au moment de l'activation du signal SEL à la sortie de l'un des récepteurs différentiels, et placée dans un second état au moment de la désactivation du signal SEL transféré sur le bus asymétrique, et

une seconde bascule (30) placée dans un premier état au moment de l'activation du signal SEL sur le bus asymétrique et placée dans un second état au moment de la désactivation du signal SEL transféré du bus asymétrique vers le bus différentiel, cette activation étant reconnue par un récepteur différentiel auxiliaire (13) connecté au bus différentiel.

6. Convertisseur selon la revendication 1, dans lequel l'automate a

un quatrième état (WIN) pour reconnaître, sur la base de l'activation mutuellement exclusive du signal d'attention ATN et des signaux d'entrée/sortie I/O, le rôle de l'unité gagnante (25) dans l'arbitrage, connectée au bus asymétrique, respectivement comme un rôle d'initiateur ou un rôle de cible, et

un cinquième état (SELST) pour reconnaître, sur la base de l'activation mutuellement exclusive du signal d'attention ATN et des signaux d'entrée/sortie I/O, le rôle de l'unité (25) connectée au bus asymétrique et sélectionnée par une unité connectée au bus différentiel, comme étant un rôle d'initiateur ou de cible.

FIG. 1

FIG.2

FIG.3

FIG.4

I/O    DB (0-7)    BSY    SEL

8    42

CK ──→ | INPUT    REG. | ←── RSTX

| STATE COMB. LOGIC |    43

CK ──→ | STATE    REG. | ←── RSTX    44

| OUTPUT COMB. LOGIC |    45

CK ──→ | OUTPUT    REG. | ←── RSTX

46

DBT (0-7)

DBSYENT

DBSYENR

TGS

DBPDIR

DBR (0-7)

FIG.5

FIG.6

FIG.7